(19) Europäisches Patentamt
European Patent Office
Office européen des brevets

(11) Veröffentlichungsnummer: **0 110 075**
**A2**

(12) # EUROPÄISCHE PATENTANMELDUNG

(21) Anmeldenummer: **83110195.1**

(22) Anmeldetag: **13.10.83**

(51) Int. Cl.³: **B 28 B 7/36**

(30) Priorität: **28.10.82 DE 3239891**

(43) Veröffentlichungstag der Anmeldung: **13.06.84 Patentblatt 84/24**

(84) Benannte Vertragsstaaten: **AT BE CH DE FR GB IT LI LU NL SE**

(71) Anmelder: **Maier & Funck Moderne Bauverfahren, Feldbergstrasse 16, D-7801 Hartheim 3 (DE)**

(72) Erfinder: **Maier, Peter, Feldbergstrasse 16, D-7801 Hartheim 3 (DE)**

(74) Vertreter: **Schmitt, Hans, Dipl.-Ing. et al, Dreikönigstrasse 13, D-7800 Freiburg (DE)**

(54) **Verfahren zum Herstellen von Waschbetonplatten sowie Vorrichtung zum Durchführen des Verfahrens.**

(57) Eine Sprüheinrichtung (1) (Fig. 1) dient zum Besprühen der Vorsatzseite von Waschbetonplatten-Rohlingen (3a), die von einer Plattenpresse her mittels eines Absetzgerätes bei einer Transportbahn (11) hochkant abgesetzt werden. Die Sprüheinrichtung (1) weist einen höhenverfahrbaren Sprühkopf (14) auf, der von unten nach oben eine gerade abgestellte Platte mit Abbindeverzögerer besprüht. Für die nächste Absetzbewegung der nachfolgenden Platte wird der Sprühkopf (14) in eine oberhalb der Plattenebene liegende Ruhelage verfahren. Von wesentlicher Bedeutung ist, daß der Abbindeverzögerer nur an die zu besprühende Vorsatzseite des Platten-Rohlinges (3a) gelangt und umgebende Bereiche gegenüber dem Sprühstrahl abgeschirmt sind. Im wesentlichen ist dazu an der Unterseite des Sprühkopfes (14) eine Auffangwanne (15) angeordnet. Diese weist zur Begrenzung der Strahlunterseite eine Begrenzungskante (16) auf, die gegenüber der Vorderkante (17) der Auffangwanne zurückversetzt ist, damit an dieser abgestreiftes Material nicht über den Bereich der Auffangwanne (15) hinausgelangen kann. Auch seitlich können noch Sprühstrahlbegrenzungen angeordnet sein. Insbesondere wird dadurch auch verhindert, daß Abbindeverzögerer auf die Stellfläche der Transportbahn (11) und damit an die Auf-

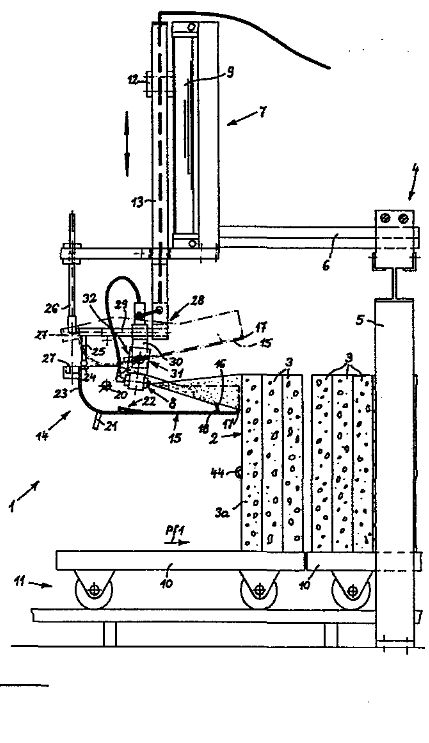

(Fortsetzung nächste Seite)

EP 0 110 075 A2

lagestirnseiten der Rohlinge (3, 3a) gelangt, wo sonst in unerwünschter Weise später Auswaschungen eintreten würden.

Die Sprüheinrichtung (1) ist in den Arbeitsbereich des Absetzgerätes integriert, wobei dieses Absetzgerät und die Sprüheinrichtung in einem wechselweisen Arbeitstakt arbeiten. Dadurch ist für die Sprüheinrichtung keine Zusatzstation od. dgl. erforderlich. Auch zeitlich wird der Arbeitstakt des Absetzgerätes, insbesondere die beim Erfassen einer Platte bei der Presse vorhandene Totzeit bei den abgestellten Platten für das Besprühen ausgenützt.

12. OKT. 1983
0110075

Firma
Maier & Funck
Moderne Bauverfahren
Feldbergstraße 16
7801 Hartheim 3

Verfahren zum Herstellen von Waschbetonplatten sowie Vorrichtung zum Durchführen des Verfahrens

Die Erfindung betrifft ein Verfahren zum Herstellen von Waschbetonplatten, wobei diese nach dem Preßformen an ihrer Vorsatzseite mit einem Abbindeverzögerer besprüht und nach einer Abbindelagerzeit ausgewaschen werden.

Üblicherweise werden Waschbetonplatten hergestellt, indem in die Wechselrahmen einer Plattenpresse ein mit einer chemischen Auswaschsubstanz beschichtetes, meist bituminiertes oder wachshaltiges Papier in Plattengröße manuell oder automatisch eingelegt und darauf der Plattenrohling, mit seiner Vorsatzseite zu diesem Papier weisend, betoniert wird. Nach diesem Preßformen wird der Waschbeton-Rohling von einem absatzgerät erfaßt und in vertikaler Lage auf Paletten od. dgl. abgesetzt. Nach einer Abbindezeit von z. B. 24 Stunden erfolgt dann das Auswaschen an der Vorsatzseite.
Nachteilig ist hierbei, daß das sogenannte Verzögerungspapier sich in Folge schlechter Haftung am Betonrohling von diesem lösen kann, so daß nach der Aushärtezeit kein Auswaschen mehr möglich ist. Weiterhin ist nachteilig, daß sich beim Einfüll- oder Preßvorgang der Platten im Verzögerungspapier Falten bilden, die zu Rillen und Unebenheiten bzw. Fehlstellen auf der Waschbetonoberfläche führen.
Ein weiterer wesentlicher Nachteil bei diesem bekannten Herstellungsverfahren besteht darin, daß das bei der Herstellung eingelegte Verzögerungspapier nach der Aushärtezeit abgezogen werden muß, was insgesamt aufwendig ist und einen hohen Arbeitsaufwand erfordert. Besonders problematisch ist anschließend auch die Entsorgung des bituminierten oder wachshaltigen, nassen und mit Zementleim verschmierten Papiers, weil ein Verbrennen nicht möglich ist und weil außerdem die im Papier befindlichen Substanzen einen biologischen Abbau nicht erlauben.

Es ist weiterhin bekannt, die Betonrohlinge sofort und direkt am Absetzgerät mittels Wasser und Sprühdüsen in einem Direktauswasch-Verfahren auszuwaschen. Da aber sowohl der Vorsatz- als auch der Hinterbeton nicht eine absolut gleichmäßige Zusammensetzung und Konsistenz aufweisen, ergeben sich hier Schwierigkeiten, die zu unregelmäßigen Waschbetonplatten bzw. zu Ausschuß führen.

Es wurde auch schon versucht, Betonrohlinge mit Abbindeverzögerer zu besprühen. Dazu wurden die Plattenrohlinge nach dem Pressen ergriffen und in horizontaler Lage über eine Sprühvorrichtung gefahren. Dabei ergeben sich jedoch bezüglich der Halterung für die Rohlinge erhebliche Probleme, da einerseits die Rohlinge nur eine geringe mechanische Stabilität aufweisen und weil andererseits die Vorsatzseite auch beim Ergreifen wegen des vorgesehenen Besprühens frei bleiben soll.

Aufgabe der vorliegenden Erfindung ist es, ein Verfahren der eingangs erwähnten Art zu schaffen, bei dem die vorgenannten Nachteile vermieden werden und bei dem außerdem der bekannte, übliche Herstellungsablauf für Waschbetonplatten u. dgl. beibehalten und praktisch unbeeinflußt bleibt.

Zur Lösung dieser Aufgabe wird erfindungsgemäß insbesondere vorgeschlagen, daß jeder Waschbeton-Rohling nach dem Pressen und etwa vertikalem Abstellen zum Abbinden mit Abbindeverzögerer besprüht wird. Dieses erfindungsgemäße Verfahren hat den wesentlichen Vorteil, daß der normale Arbeitsprozeß praktisch unbeeinflußt bleibt. Trotz des Besprühvorganges wird dabei nämlich in bekannter Weise nach dem Formpressen des Waschbeton-Rohlings dieser aus der Presse entnommen und mittels eines Absetzgerätes in etwa vertikaler Lage auf einen Palettenwagen od. dgl. abgesetzt. Vor dem Abstellen des nächsten Rohlings erfolgt dann das Besprühen des gerade abgesetzten Waschbeton-Rohlings. Zusätzliche Halteeinrichtungen für die jeweils zu besprühende Platte sind hier in vorteilhafter Weise nicht erforderlich.
Durch das in den Arbeitstakt-Zwischenraum des Absetzgerätes eingreifende Besprühen wird die insgesamt zur Verfügung stehende Taktzeit des Absetzgerätes gleichzeitig auch noch für das Besprühen mit ausgenutzt, so daß sich insgesamt eine Bearbeitungszeit-Verkürzung ergibt.

Nach einer Weiterbildung der Erfindung erfolgt das Besprühen der Platten jeweils in einer fortlaufende, vorzugsweise kontinuierlichen Bewegung von unten nach oben. Durch diese Behandlungsrichtung wird der sich beim Besprühen einstellende "Aufprallnebel" u. a. auch durch den Sog des Sprühstrahles mit nach oben weggenommen, so daß ein störender Belag der Plattenumgebung mit Abbindeverzögerer vermieden wird. Dazu ist nach einer Weiterbildung der Erfindung auch vorgesehen, daß der bzw. die Sprühstrahle entsprechend der Umrißform der jeweiligen Platte begrenzt werden.

Die Erfindung betrifft auch eine Vorrichtung zum Herstellen von Waschbetonplatten, die eine Sprüheinrichtung zum Aufbringen von Abbindeverzögerer auf die Vorsatzseite eines vertikal zum Abbinden aufgestellten Waschbetonplatten-Rohlings aufweist, insbesondere zum Durchführen des erfindungsgemäßen Verfahrens. Eine solche Vorrichtung ist insbesondere dadurch gekennzeichnet, daß die Sprüheinrichtung mit wenigstens einer relativ zum Rohling etwa in einer Parallelebene dazu bewegbaren Sprühdüse ausgebildet ist, und daß darunter eine Auffangvorrichtung für überschüssiges Sprühmaterial vorgesehen ist. Somit kann ein abgestellter Waschbetonplatten-Rohling von seiner Vorsatzseite her mit Abbindeverzögerer besprüht werden, ohne daß überschüssiges Sprühmaterial an benachbarte Einrichtungen bzw. an Stellen des Rohlings gelangt, wo ein Abbindeverzögerer unerwünscht ist.

Vorteilhafterweise ist die Auffangvorrichtung unterhalb der Sprühdüse(n) vorzugsweise in Form einer Auffangwanne angeordnet, die an ihrem dem zu besprühenden Rohling zugewandten Endbereich eine gerade, etwa horizontale Sprühstrahlbegrenzungskante und an ihrem rückseitigen Ende eine Rückwand aufweist. Durch diese Auffangwanne wird überschüssiges Sprühmaterial aufgefangen, wobei solches Sprühmaterial insbesondere auch an der vom Sprühstrahl direkt benetzten Begrenzungskante anfällt. Diese Begrenzungskante sorgt dafür, daß die Unterseite des im Querschnitt etwas elyptischen Sprühstrahles begradigt wird, so daß ein exaktes Besprühen der Rohlinge auch im Kantenbereich gut möglich ist.
Vorzugsweise ist die Auffangwanne kippbar um eine quer zur Sprührichtung verlaufende Achse gelagert, wobei sie sich in Sprühstellung in etwa horizontaler und in Ruhestellung vorzugsweise in einer maximalen Hubstellung, in einer nach hinten geneigten Lage befindet. Dadurch wird aufgefangenes Sprühmaterial in der oberen Hubstellung im hinteren Bereich der Wanne gesammelt und kann dort gegebenenfalls entnommen werden. Dazu kann nach einem weiteren Merkmal der Erfindung im Boden der Wanne etwa an der in Kippstellung tiefsten Stelle ein Ablaufanschluß vorgesehen sein, wobei gegebenenfalls im Zwischenbereich zwischen diesem Ablaufanschluß und der Sprühstrahlbegrenzungskante eine vorzugsweise als Stufe od. dgl. ausgebildete Rücklaufsperre vorgesehen ist. Von diesem Ablaufanschluß kann eine Rückführung des Sprühmateriales in einen Vorratsbehälter erfolgen. Die vorgesehene Rücklaufsperre verhindert, daß im rückwärtigen Teil befindliches Sprühmittel beim nächsten Sprühvorgang wirder nach vorne gelangt.

Nach einer Weiterbildung der Erfindung sind die Sprühdüsen voneinander unabhängig bezüglich ihrer Sprührichtung, ihrem Sprühabstand und dgl. verstellbar. Dadurch ist einerseits eine Anpassung an die Form des zu besprühenden Rohlings und insbesondere auch bei mehreren nebeneinander angeordneten Düsen eine genaue Einstellung eines Gesamtsprühstrahles in gewünschter Form möglich.

Die Erfindung betrifft auch ein Sprühmittel zum Besprühen von Waschbeton-Rohlingen als Abbindeverzögerer. Dieses Sprühmittel ist insbesondere dadurch gekennzeichnet, daß der Abbindeverzögerer auswaschaktive Substanzen wie z. B. Zucker- oder Melasselösungen enthält, gegebenenfalls mit chemischen Zusätzen, wie z. B. Invertase. Ein solcher Abbindeverzögerer ist auf die speziellen Bedürfnisse beim Besprühen abgestimmt und kann insbesondere auch bei hohen Betriebsdrücken kristallisationsstabil bleiben.

Zusätzliche Ausgestaltungen der Erfindung sind in den weiteren Unteransprüchen aufgeführt. Nachstehend ist die Erfindung mit ihren wesentlichen Einzelheiten anhand der Zeichnung noch näher erläutert.

Es zeigt:

Fig. 1 eine Seitenansicht einer Sprüheinrichtung mit Palettenwagen und darauf abgestellten Waschbetonplatten-Rohlingen,

Fig. 2 eine Vorderseitenansicht einer zum Teil dargestellten Sprüheinrichtung,

Fig. 3 eine Seitenansicht einer Sprühmittel-Versorgungseinheit,

Fig. 4 eine auseinandergezogene Darstellung eines Düsenelementhalters und

Fig. 5 einen montierten Düsenelementhalter mit Srühdüse in Arbeitsstellung.

Beim Herstellen von Waschbetonplatten werden diese zunächst in einer hier nicht dargestellten Presse gepreßt und anschließend mittels eines Absetzgerätes von dieser Presse übernommen und anschließend auf eine Transportbahn abgesetzt, wobei diese Transportbahn im Ausführungsbeispiel gemäß Fig. 1 durch Palettenwagen 10 gebildet sind. Der Absetzvorgang erfolgt im Rhythmus des Pressenausstoßes beispielsweise in Arbeitstakten von 10 bis 15 Sekunden pro Platte.
Erfindungsgemäß ist nun der Presse nachgeschaltet und insbesondere im Bereich der Transportbahn 11 eine im ganzen mit 1 bezeichnete Sprüheinrichtung zum Aufsprühen

/7

eines Abbindeverzögerers auf die Vorsatzseite 2 der Waschbetonplatten-Rohlinge 3 vorgesehen.
Die Platten stehen nach dem Absetzen in vertikaler Lage dicht an dicht aneinander als Plattenreihen auf dem Palettenwagen 10 od. dgl. Transportmittel. Das Absetzgerät setzt die bei der Presse ergriffene Platte jeweils an gleicher Stelle bei der Transportbahn 11 ab. Es ist deshalb erforderlich, daß die Palettenwagen 10 im Absetzrhythmus jeweils genau um eine Plattenstärke weiter in Richtung des Pfeiles Pf 1 verfahren werden. Der jeweils zuletzt auf dem Palettenwagen 10 abgesetzte Platten-Rohling 3 a wird dann an seiner Vorsatzseite 2, die nach dem Abbinden der Platte ausgewaschen wird, besprüht.

Die Sprüheinrichtung ist im wesentlichen oberhalb der Transportbahn 11 angeordnet, so daß der Arbeitsbereich für das Absetzgerät unbeeinflußt bleibt.

Das Sprühgerät 1 weist ein Grundgestell 4 auf, das hier im wesentlichen durch eine neben der Transportbahn 11 angeordnete Kragarmhalterung 5 gebildet ist. An dieser Halterung ist in Transportrichtung hin und her verschiebbar ein Halter 6 befestigt, der an seinem anderen Ende eine im ganzen mit 7 bezeichnete Hubeinrichtung zum Höhenverfahren der Sprühdüsen 8 aufweist.
Die Hubeinrichtung 7 ist mit einem oder mehreren Hubzylindern 9 ausgerüstet, der ein an seiner Längsseite durch einen Schlitz greifendes Hubelement 12 aufweist. Dieses ist mit einem Halterahmen 13 verbunden (vgl. auch Fig. 2), an dessen unterem Ende ein insgesamt mit 14 bezeichneter Sprühkopf angebracht ist. Durch die Hubeinrichtung 7 kann der Sprühkopf 14 von einer oberhalb der Plattenoberkanten bzw. oberhalb des Eingriffsbereiches des Absetzgerätes befindlichen Stellung, die in Fig. 1 strichpunktiert eingezeichnet ist, nach unten in Arbeitsstellung verfahren werden. Zweckmäßigerweise verläuft dabei der Sprühvorgang von unten nach oben, so daß die Hubeinrichtung 7 aus der oberen Ruhestellung zunächst in einem schnellen Vorschub den Sprühkopf 14 nach unten in eine Entlage verfährt, aus der dann ab einer vorgebbaren Höhenlage der Sprühvorgang einsetzt und beim oberen Endbereich der Platten abgeschaltet wird. Bei diesem Hubvorgang ist die Vorschubgeschwindigkeit gegenüber der Abwärtsbewegung verlangsamt und insbesondere an die jeweiligen Bedürfnisse beim Besprühen, auf die Sprühmenge u. dgl. abgestimmt. Der gesamte Sprühvorgang erfolgt in einem Zeitbereich von beispielsweise 3 bis 8 Sekunden und paßt damit insbesondere auch in den vorhandenen Arbeitszyklus des Absetzgerätes.

In den Fig. 1 und 2 ist gut zu erkenne, daß der Sprühkopf 14 unterhalb der Sprühdüsen 8 eine als Auffangwanne 15 ausgebildete Auffangvorrichtung für überschüssiges Sprühmaterial aufweist. An dieser Auffangwanne 15 ist mit Abstand zu ihrem dem zu besprühenden Rohling 3 a zugewandten Endbereich eine gerade, etwa horizontale Sprühstrahl-Begrenzungskante 16 vorgesehen. Diese ist etwa stegförmig ausgebildet und erstreckt sich etwa über die gesamte Sprühbreite. Durch diese Begrenzungskante 16 wird erreicht, daß der im Querschnitt etwa elypsenförmige Sprühstrahl an seiner Unterseite geradlinig begrenzt wird, so daß der Sprühstrahl zumindest in seinem unteren Bereich kantenparallel zur Unterseite des Plattenrohlings verläuft, so daß einerseits vermieden wird, daß außerhalb der Platte liegende Bereiche besprüht werden bzw. Eckbereiche der Platte ohne Besprühung bleiben. Dadurch, daß die Begrenzungskante 16 etwas gegenüber der geringfügig hochgezogenen Vorderkante 17 zurückversetzt ist, erreicht man, daß an der Begrenzungskante 16 "abgestreiftes" Sprühmaterial nicht über die Wanne hinausgelangen kann.

Die Höhen der Begrenzungskante 16 und der etwas hochgezogenen Vorderkante 17 sind so bemessen, daß die Begrenzungskante 16 etwas zur Begradigung der Unterseite des Sprühstrahles in diesen hineinragt, während die Vorderkante 17 mit ihrer Oberseite außerhalb des Sprühstrahlbereiches liegt. Die Begrenzungskante 16 weist bodenseitig Durchbrüche 18 auf, damit sich vor dieser Kante ansammelndes Sprühmaterial in den rückseitigen Bereich der Auffangwanne 15 gelangen kann.
Fig. 2 läßt noch gut erkennen, daß neben dieser Begrenzungskante 16 für die Unterseite des bzw. der Sprühstrahle auch Sprühstrahl-Seitenbegrenzungen 19 zum etwa geradlinigen Begrenzen der Seitenbereiche des Sprühstrahles vorgesehen sein können. Erwähnt sei noch, daß zur plattenform-gerechten Begrenzung des bzw. der Sprühstrahle gegebenenfalls auch eine blendenförmige Maske mit einem insbesondere rechteckigen Durchtrittsschlitz vorgesehen sein kann.

Die Auffangwanne 15 ist um eine quer zur Sprührichtung verlaufende Achse 20 kippbar gelagert, wobei sie sich in Sprühstellung in etwa horizontaler und in Ruhestellung in einer maximalen Hubstellung in einer nach hinten gekippten Lage, wie in Fig. 1 strichpunktiert eingezeichnet, befindet. Das sich während eines Sprühvorganges innerhalb der Auffangwanne 15 ansammelnde, überschüssige Sprühmaterial kann dadurch in den hinteren Bereich der Auffangwanne 15 geführt werden, wo sich etwa an der in Kippstellung tiefsten Stelle ein Ablaufanschluß 21 befindet. Zwischen diesem Ablaufanschluß 21 und der Sprühstrahl-Begrenzungskante 16 erkennt man noch eine Rücklaufsperre 22, die ein Zurückfließen von sich beim Ablaufanschluß 21 angesammeltem Sprühmaterial zurück in den vorderen Bereich der Wanne verhindert.
Der Abstand der Vorderkante 17 der Auffangwanne 15 von der Vorsatzseite 2 des Rohlings 3 a kann beispielsweise etwa 1 cm betragen. Der Gesamtabstand der Sprühdüse bzw. der Sprühdüsen 8 beträgt vorzugsweise etwa 20 cm. Fig. 1 läßt noch gut erkennen, daß der bzw. die Sprühstrahle leicht nach unten gerichtet sind. Dadurch erreicht man, daß auch der nahe Unterkantenbereich des zu besprühenden Platten-Rohlings 3 a trotz der unterhalb der Düsen befindlichen Auffangwanne 15 erfaßt wird.

Die Auffangwanne 15 liegt in Sprühstellung mit einer bei der Oberkante ihrer Rückwand 23 angeordneten Anlagefläche 24 an einem Anschlag 25 an, der die Auffangwanne 15 in etwa horizontaler Lage hält und der den Arbeitshub des Sprühkopfes 14 mitmacht. Die Kippachse 20 der Wanne ist so angeordnet, daß sich schwerkraftbedingt die Wanne in Arbeitsstellung an diesen Anschlag 25 anlegt.
Am feststehenden Grundgestell od. dgl. ist ein weiterer Anschlag 26 als Kippanschlag befestigt, der eine Anlagefläche 27 der Wanne ab einer bestimmten Hubstellung beaufschlagt und bei einer weiteren Hubbewegung nach oben das Kippen der Auffangwanne 15 in die strichpunktierte Lage bewirkt.

Der obere Halterahmen 13 weist bei seinem unteren Endbereich 28 etwa horizontal vorstehende Haltebolzen 29 auf, an denen der Sprühkopf 14 nach vorne und hinten verschiebbar befestigt ist. Der Sprühkopf 14 weist als Halterung zwei etwa laschenförmige Arme 30 auf, die Führungsöffnungen zum Aufstecken auf die Haltebolzen 29 des Halterahmens 13 haben. Dadurch können diese Arme 30 auf den Haltebolzen 29 zum Verstellen des Gesamtabstandes des Sprühkopfes zur Platte 3 a verstellt und z. B. durch eine hier nicht dargestellte Klemmverbindung in der jeweiligen Lage festgelegt werden. Außerdem gehört zur Halterung des Sprühkopfes 14 noch eine durch ein Halterohr gebildete Quertraverse 31. An dieser sind im Ausführungsbeispiel drei Düsenelementhalter 32 mit Sprühdüsen 8 befestigt. Auch die Auffangwanne 15 ist über Laschen 33 mit den äußeren Enden der Quertraverse 31 verbunden. Die Düsenelementhalter 32 lassen sich unabhängig voneinander auf der Quertraverse 31 seitenverschieben zum genauen Einjustieren auf ein zu besprühendes Plattenformat.

In Fig. 3 ist noch eine Zuführeinrichtung 34 für Sprühmaterial zu erkennen, die im wesentlichen eine Luftwartungseinheit 35, eine pneumatisch angetriebene Kolbenpumpe 36, ein Feinstfilter 37 sowie einen Sprühmittelvorratsbehälter 38 aufweist.
Das Aufsprühen erfolgt im sogenannten "Airless-Verfahren", bei dem in bekannter Weise das Sprühmittel unter hohem Druck von beispielsweise 30 bis 80 bar gesetzt wird. Dies erfolgt mit der Kolbenpumpe 36, die ein Übersetzungsverhältnis von beispielsweise 1 : 19 haben kann.
In Fig. 2 erkennt man noch innterhalb der Sprühmittelzuführung ein pneumatisch auslösbares Ventil 39 (Automatik-Pistole) sowie einen Verteiler 40, von dem aus dann Versorgungsleitungen zu den einzelnen Spritzdüsen 8 führen. Die Spritzdüsen 8 sind als Flachstrahldüsen mit einer Öffnung von vorzugsweise 0,38 mm und einem Spritzwinkel von etwa 50 bis 80$^{o}$ ausgebildet. Solche Flachstrahldüsen eignen sich besonders gut für den erfindungsgemäßen Anwendungsfall. Jedes Ventil ist noch mit einem Rückstoßventil ausgerüstet, durch das die Düsen bei Unterschreiten eines bestimmten Betriebsdruckes automatisch schließen. Die nebeneinander angeordneten Spritzdüsen sind bezüglich ihres Seitenabstandes auf den Sprühabstand sowie den jeweiligen Sprühwinkel abgestimmt, so daß sich bei dem zu besprühenden Rohling 3 a praktisch keine Strahlüberschneidung ergibt.

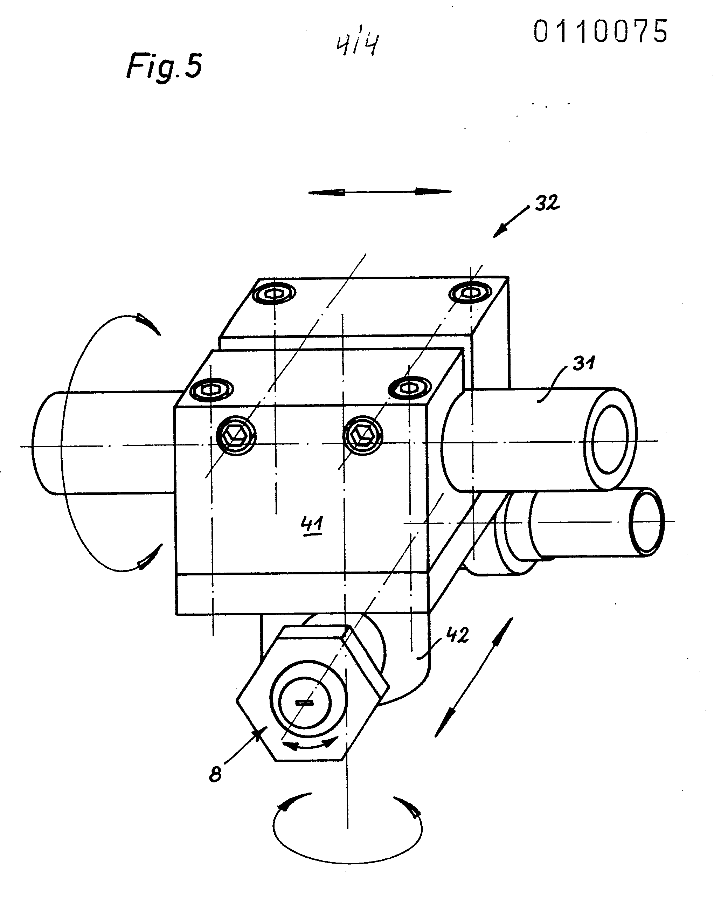

Durch die Anordnung der Düsenelementhalter 32 und auch durch deren noch zu beschreibende Ausbildung gemäß Fig. 4 und 5 ist die Sprührichtung und Lage praktisch in alle Richtungen unabhängig voneinander verstellbar. Wie bereits vorerwähnt, lassen sich die Düsenelementhalter 32 gemäß dem Doppelpfeil Pf 2 auf der Quertraverse 31 seitenverschieben und zusätzlich bei Ausbildung der Quertraverse 31 als Rohr auch verdrehen. Die einmal eingestellte Lage ist dann durch eine hier nicht dargestellte Klemmeinrichtung od. dgl. festlegbar. Der Düsenelementhalter 32 weist ein Klemmgehäuse 41 zur Halterung an der Quertraverse 31 sowie einen um eine quer zur Quertraverse liegenden Achse drehbar an diesem Klemmgehäuse 41 befestigten Sprühdüsenhalter 42 auf, in den längsverschiebbar sowie auch verdrehbar die Sprühdüse 8 eingreift (vgl. Fig. 4 und 5). Der Sprühdüsenhalter 42 wird durch ein überwurfmutterartiges Teil 43 am Klemmgehäuse 41 befestigt. Durch diese Ausbildung und durch die Anbringung des Düsenelementhalters läßt sich jeder Sprühstrahl exakt einjustieren, so daß eine ebene und etwa überschneidungsfreie Besprühung möglich ist. Dadurch und auch durch das Airless-Verfahren u. dgl. ist auch eine sehr gleichmäßige Auftragung von Sprühmittel möglich. Die Aufsprühmenge kann beispielsweise 100 $gr/m^2$ betragen.

Der Funktionsablauf beim Besprühen geht folgendermaßen vor sich:
Die Sprüheinrichtung 1 befindet sich mit ihrem Sprühkopf 14 in Ausgangslage etwa 10 cm oberhalb der Oberseite der Reihe von bereits besprühten Waschbeton-Rohlingen. Diese Rohlinge werden Stück für Stück mittels eines Absetzgerätes von einer Presse her an gleicher Stelle auf eine Transportbahn 11 mit Palettenwagen 10 hochkant abgestellt. Entsprechend der Plattendicke erfolgt nach jedem Absetzen ein Weitertransport der Palettenwagen 10 gemäß

dem Pfeil Pf 1 in Fig. 1. Zur Steuerung dient vorzugsweise eine Lichtschranke 44. Diese kann auch als Auslöser zum Betätigen der Sprüheinrichtung 1 dienen. Nachdem der Rohling 3 a abgesetzt und das Absetzgerät wieder zurückgefahren ist, wird der Sprühkopf 14 durch die Hubeinrichtung 7 nach unten in eine Endlage verfahren, wobei aber noch kein Besprühen erfolgt. Anschließend nach Umkehr wird ab einer einstellbaren Höhe durch beim Hubzylinder 9 angeordnete Grenztaster der Sprühvorgang bei der Hubbewegung nach oben ausgelöst und durch einen weiteren Grenztaster etwa bei Erreichen der Oberkante des Rohlings 3 a wieder abgeschaltet. Der Sprühkopf fährt aber weiter hoch bis durch einen Endlagenschalter der Gesamthub in der obersten Ruhestellung beendet ist. Durch das Absetzgerät wird dann ein neuer Rohling 3 a auf dem Palettenwagen 10 abgesetzt und in Besprühstellung, gesteuert durch die Lichtschranke 44, positioniert. Der vorbeschriebene Sprühvorgang läuft dann von neuem ab. Die schon vorerwähnten Sprühstrahl-Seitenbegrenzungen 19 verhindern auch einen seitlichen Austritt von Sprühmittel, so daß auch die Lichtschranke 44 funktionsfähig bleibt. Durch die untere Begrenzungskante 16 sowie insgesamt die Auffangwanne 15 wird auch vermieden, daß Sprühmittel auf die Transportbahn 11 mit den Palettenwagen 10 gelangt, wodurch sich sonst in nachteiliger Weise an den Seitenstandflächen der Platten ungewollt Auswaschungen ergeben könnten. Dies wird bei der erfindungsgemäßen Sprüheinrichtung 1 wirksam verhindert.

Erwähnt sei noch, daß der Sprühkopf 14 im vorliegenden Ausführungsbeispiel insgesamt als Schnellwechsel-Baugruppe ausgebildet ist, die beim Umstellen auf andere Plattenformate od. dgl. gegen einen anderen Sprühkopf ausgewechselt werden kann. Das Trennen kann dabei vorzugsweise bei der Aufsteckverbindung auf die Haltebolzen 29 am unteren Ende des Halterahmens 13 erfolgen.

Bei der erfindungsgemäßen Vorrichtung werden hinsichtlich des Sprühmittels besondere Anforderungen gestellt. Ein geeigneter Abbindeverzögerer enthält auswaschaktive Substanzen, wie z. B. Zucker- oder Melasselösungen, gegebenenfalls mit chemischen Zusätzen, wie z. B. Invertase. Dadurch erreicht man, daß der Abbindeverzögerer auch bei Drücken bis zu 80 bar kristallisationsstabil bleibt. Der Abbindeverzögerer kann auch Verdickungsmittel wie z. B. Galaktomannanderivat oder wasserlösliche Zelluloseäther enthalten, die auch bei Drücken von 30 bis 80 bar kristallisationsstabil sowie hinsichtlich ihrer Viskosität stabil bleiben. Die Verdickungsmittel sind dabei elektrolytbeständig und mit Stärkederivaten kombinationsfähig und weisen keine Alkalisensibilität auf.

Der Abbindeverzögerer kann auch eine trocknungshemmende Substanz, wie z. B. Glykole enthalten, die nach dem Versprühen die Austrocknung der Oberfläche verzögern und damit die Wirksamkeit des Abbindeverzögerungseffektes ergeben. Weiterhin kann der Abbindeverzögerer eine weichmachende Substanz wie z. B. vorzugsweise ein Tensid enthalten, die es ermöglicht, die Eindringtiefe in den Zementleim bzw. das Betongefüge steuerbar zu machen. Als Auswasch- bzw. Wirksubstanz kann auch ein Additiv wie z. B. Trinatrium-Ortho-Phosphat anstelle des Abbindeverzögerers vorgesehen sein. In diesem Falle wird eine völlige Zerstörung des Zementleimgefüges bewirkt und so der Auswaschvorgang zeitlich ohne Vorgabe oder Beschränkung durchführbar. Dies kann insbesondere bei einer Wochenendproduktion vorteilhaft sein, wo die übliche Aaushärtezeit überschritten wird.

Alle in der Beschreibung, den Ansprüchen und der Zeichnung dargestellten Merkmale können sowohl einzeln als auch in beliebiger Kombination miteinander erfindungswesentlich sein.

- Ansprüche -

Firma
Maier & Funck
Moderne Bauverfahren
Feldbergstraße 16
7801 Hartheim 3

## Ansprüche

1. Verfahren zum Herstellen von Waschbetonplatten, wobei diese nach dem Preßformen an ihrer Vorsatzseite mit einem Abbindeverzögerer besprüht und nach einer Abbindelagerzeit ausgewaschen werden, d a d u r c h g e k e n n z e i c h n e t , daß jeder Waschbeton-Rohling (3, 3 a) nach dem Pressen und etwa vertikalen Abstellen zum Abbinden mit Abbindeverzögerer besprüht wird.

2. Verfahren nach Anspruch 1, dadurch gekennzeichnet, daß das Besprühen der Platten (3 a) jeweils in einer fortlaufenden, vorzugsweise kontinuierlichen Bewegung von unten nach oben erfolgt.

3. Verfahren nach Anspruch 1 oder 2, dadurch gekennzeichnet, daß der bzw. die Sprühstrahle entsprechend der Umrißform der jeweiligen Platten begrenzt werden.

4. Verfahren nach Anspruch 1 bis 3, dadurch gekennzeichnet, daß das Aufsprühen des Abbindeverzögerers im Airless-Verfahren erfolgt.

5. Verfahren nach einem der Ansprüche 1 bis 4, dadurch gekennzeichnet, daß die zu besprühende Platte vorzugsweise im Anschluß an eine abgestellte Reihe von bereits behandelten Platten hochkant abestellt wird, daß anschließend die Sprüheinrichtung (1) von oben nach unten in eine Ausgangslage verfahren und danach beim Hochfahren ab einer vorgebbaren Höhenlage der Sprühstrahl eingeschaltet und in einer Sprühendlage abgeschaltet wird und daß schließlich die Sprüheinrichtung weiter nach oben in eine Endruhelage hochgefahren wird.

6. Vorrichtung zum Herstellen von Waschbetonplatten, die eine Sprüheinrichtung zum Aufbringen von Abbindeverzögerer auf die Vorsatzseite eines vertikal zum Abbinden aufgestellten Waschbetonplatten-Rohlinges aufweist, insbesondere zum Durchführen des Verfahrens nach Anspruch 1 bis 5, dadurch gekennzeichnet, daß die Sprüheinrichtung (1) mit wenigstens einer relativ zum Rohling etwa in einer Parallelebene dazu bewegbaren Sprühdüse ausgebildet ist, und daß darunter eine Auffangvorrichtung (15) für überschüssiges Sprühmaterial vorgesehen ist.

7. Vorrichtung nach Anspruch 6, dadurch gekennzeichnet, daß die Sprüheinrichtung (1) im Transportweg nach der Plattenpresse und insbesondere bei einer nachgeordneten Transportbahn (11) vorzugsweise mit Palettenwagen (10) od. dgl. angeordnet ist.

8. Vorrichtung nach Anspruch 6 oder 7, dadurch gekennzeichnet, daß die Sprüheinrichtung (1) im wesentlichen oberhalb und außerhalb des Transportweges für die Rohlinge und insbesondere am Zuführende von der Plattenpresse her angeordnet ist.

9. Vorrichtung nach einem der Ansprüche 6 bis 8, dadurch gekennzeichnet, daß die Sprüheinrichtung (1) eine Hubeinrichtung (7) zum Höhenverfahren der Sprühdüse(n) (8) aufweist.

10. Vorrichtung nach einem der Ansprüche 6 bis 9, dadurch gekennzeichnet, daß die Sprüheinrichtung (1) ein Grundgestell (4) aufweist, an dem die Hubeinrichtung (7) befestigt bzw. befestigbar ist und daß dieses Grundgestell (4) als Brücke über die Transportbahn (11) oder vorzugsweise als Kragarmhalterung neben der Transportbahn ausgebildet ist.

11. Vorrichtung nach einem der Ansprüche 6 bis 10, dadurch gekennzeichnet, daß die Hubeinrichtung (7) wenigstens einen Hubzylinder (9) aufweist, der einerseits mit dem Grundgestell (4) und andererseits mit einem Halterahmen (13) für einen Sprühkopf (14) mit einem oder mehreren Düsenelementhaltern (32) verbunden ist.

12. Vorrichtung nach Anspruch 11, dadurch gekennzeichnet, daß der Halterahmen (13) an seinem unteren Endbereich mit einer Quertraverse (31), vorzugsweise einem Halterohr für ein oder mehrere Düsenelementhalter verbunden ist, welches zusammen mit den Düsenelementhaltern u. dgl. insgesamt den Sprühkopf (14) bilden.

13. Vorrichtung nach einem der Ansprüche 6 bis 12, dadurch gekennzeichnet, daß der Sprühkopf (14) als Schnellwechselbaugruppe ausgebildet und vorzugsweise über eine Steck-Klemmverbindung od. dgl. mit dem Halterahmen (13) verbunden bzw. verbindbar ist.

14. Vorrichtung nach einem der Ansprüche 6 bis 13, dadurch gekennzeichnet, daß der Sprühkopf (14) relativ zum Halterahmen (13) verstellbar ist zur Veränderung des Sprühabstandes zu einem Plattenrohling und daß dazu vorzugsweise am unteren Ende des Halterahmens (13) rückseitig vorstehende Bolzen (29) vorgesehen sind, die in passende Führungen der Quertraverse bzw. einer Halterung dafür eingreifen.

15. Vorrichtung nach einem der Ansprüche 6 bis 14, dadurch gekennzeichnet, daß unterhalb der Sprühdüse(n) (8) die Auffangvorrichtung vorzugsweise in Form einer Auffangwanne (15) angeordnet, die an ihrem dem zu besprühenden Rohling (3 a) zugewandten Endbereich eine gerade, etwa horizontale Sprühstrahl-Begrenzungskante (16) und an ihrem rückseitigen Ende eine Rückwand (23) aufweist.

16. Vorrichtung nach Anspruch 15, dadurch gekennzeichnet, daß die Auffangwanne (15) kippbar um eine quer zur Sprührichtung verlaufende Achse (20) gelagert ist, wobei sie sich in Sprühstellung in etwa horizontaler und in Ruhestellung vorzugsweise in einer maximalen Hubstellung in einer nach hinten gekippten Lage befindet.

17. Vorrichtung nach einem der Ansprüche 6 bis 16, dadurch gekennzeichnet, daß die Auffangwanne (15) in Sprühstellung gegen einen insbesondere an ihrem rückseitigen Endbereich angreifenden Anschlag (25) anliegt und daß ein weiterer, vorzugsweise verstellbarer Anschlag (26) vorgesehen ist, der als Kippanschlag für die Hubstellung der Wanne dient.

18. Vorrichtung nach einem der Ansprüche 6 bis 17, dadurch gekennzeichnet, daß im Boden der Wanne etwa an der in Kippstellung tiefsten Stelle ein Ablaufanschluß (21) vorgesehen ist, und daß gegebenenfalls im Zwischenbereich zwischen diesem Ablaufanschluß und der Sprühstrahl-Begrenzungskante (16) eine vorzugsweise als Stufe od. dgl. ausgebildete Rücklaufsperre vorgesehen ist.

19. Vorrichtung nach einem der Ansprüche 6 bis 18, dadurch gekennzeichnet, daß die Wanne bei der Oberkante ihrer Rückwand (23) Anschlagflächen (24, 27) für die Anschläge (25, 26) aufweist, und daß der Kippanschlag (26) am feststehenden Halterahmen und der andere Anschlag (25) an der höhenverstellbaren Quertraverse od. dgl. des Sprühkopfes (14) befestigt sind.

20. Vorrichtung nach einem der Ansprüche 6 bis 19, dadurch gekennzeichnet, daß seitlich am Sprühkopf (14) od. dgl. Sprühstrahl-Seitenbegrenzungen (19) vorgesehen sind.

21. Vorrichtung nach einem der Ansprüche 6 bis 20, dadurch gekennzeichnet, daß oberhalb der Auffangwanne (15) eine Sprühstrahl-Maske mit einem insbesondere rechteckiben Durchtrittsschlitz angeordnet ist.

22. Vorrichtung nach einem der Ansprüche 6 bis 21, dadurch gekennzeichnet, daß die Sprühstrahl-Begrenzungskante (16) etwa stegförmig ausgebildet ist und sich etwa über die gesamte Sprühbreite erstreckt und insbesondere gegenüber der Vorderkante (17) der Auffangwanne (15) zurückversetzt angeordnet ist, und daß sie vorzugsweise bodenseitige Durchbrüche (18_ aufweist.

23. Vorrichtung nach einem der Ansprüche 6 bis 22, dadurch gekennzeichnet, daß sich die Sprühstrahlunterseite tiefer als die Begrenzungskante (16) und höher als die Vorderkante (17) der Auffangwanne (15) befindet.

24. Vorrichtung nach einem der Ansprüche 6 bis 23, dadurch gekennzeichnet, daß die Düse(n) (8) als Flachstrahldüse ausgebildet ist, vorzugsweise mit einer Öffnung von etwa 0,38 mm und einem Spritzwinkel von etwa 50 bis 80°, und daß sie insbesondere mit einem Rückstoßventil versehen ist.

25. Vorrichtung nach einem der Ansprüche 6 bis 24, dadurch gekennzeichnet, daß bei mehreren nebeneinander angeordneten Sprühdüsen (8) mit Düsenelementhaltern (32) der Seitenabstand auf den Sprühabstand sowie den jeweiligen Sprühwinkel abgestimmt ist derart, daß sich bei dem zu besprühenden Rohling (3 a) praktisch keine Strahlüberschneidung ergibt.

26. Vorrichtung nach einem der Ansprüche 6 bis 25, dadurch gekennzeichnet, daß die Sprühdüsen (8) voneinander unabhängig bezüglich ihrer Sprührichtung, dem Sprühabstand u. dgl. verstellbar sind.

27. Vorrichtung nach einem der Ansprüche 6 bis 26, dadurch gekennzeichnet, daß der Düsenelementhalter (32) auf dem ihn haltenden bzw. durchsetzenden Halterohr (31) seitenverschiebbar und/oder verschwenkbar sowie festlegbar gelagert ist.

28. Vorrichtung nach einem der Ansprüche 6 bis 27, dadurch gekennzeichnet, daß der Düsenelementhalter (32) ein Klemmgehäuse (41) zur Halterung am Halterohr (31) od. dgl. sowie einen um eine quer zum Halterohr od. dgl. liegende Achse drehbar an diesem befestigten Sprühdüsenhalter (42) aufweist, in dem vorzugsweise längsverschiebbar sowie gegebenenfalls verdrehbar die Sprühdüse (8) eingreift.

29. Sprühmittel zum Besprühen von Waschbeton-Rohlingen als Abbindeverzögerer, insbesondere zur Durchführung des Verfahrens nach Anspruch 1 bis 5 bzw. zur Verwendung bei der Vorrichtung gemäß den Ansprüchen 6 bis 28, dadurch gekennzeichnet, daß der Abbindeverzögerer auswaschaktive Substanzen, wie z. B. Zucker- oder Melasselösungen enthält, gegebenenfalls mit chemischen Zusätzen, wie z. B. Invertase.

30. Sprühmittel nach Anspruch 29, dadurch gekennzeichnet, daß der Abbindeverzögerer Verdickungsmittel wie z. B. Galaktomannanderivate oder wasserlösliche Zelluloseäther enthält, die bei Drücken von 30 bis 80 bar kristallisationsstabil sowie hinsichtlich ihrer Viskosität stabil bleiben.

31. Sprühmittel nach Anspruch 30, dadurch gekennzeichnet, daß die Verdickungsmittel elektrolytbeständig und kombinationsfähig mit Stärkederivaten sind und keine Alkalisensibilität aufweisen.

32. Sprühmittel nach einem der Ansprüche 29 bis 31, dadurch gekennzeichnet, daß der Abbindeverzögerer eine trocknungshemmende Substanz wie z. B. Glykole enthält.

33. Sprühmittel nach einem der Ansprüche 29 bis 32, dadurch gekennzeichnet, daß der Abbindeverzögerer eine weichmachende Substanz wie z. B. vorzugsweise ein Tensid enthält.

34. Sprühmittel nach einem der Ansprüche 29 bis 33, dadurch gekennzeichnet, daß als Auswasch- bzw. Wirksubstanz ein Additiv wie z. B. Trinatrium-Ortho-Phosphat anstelle des Abbindeverzögerers vorgesehen ist.

- Zusammenfassung -

Fig. 1

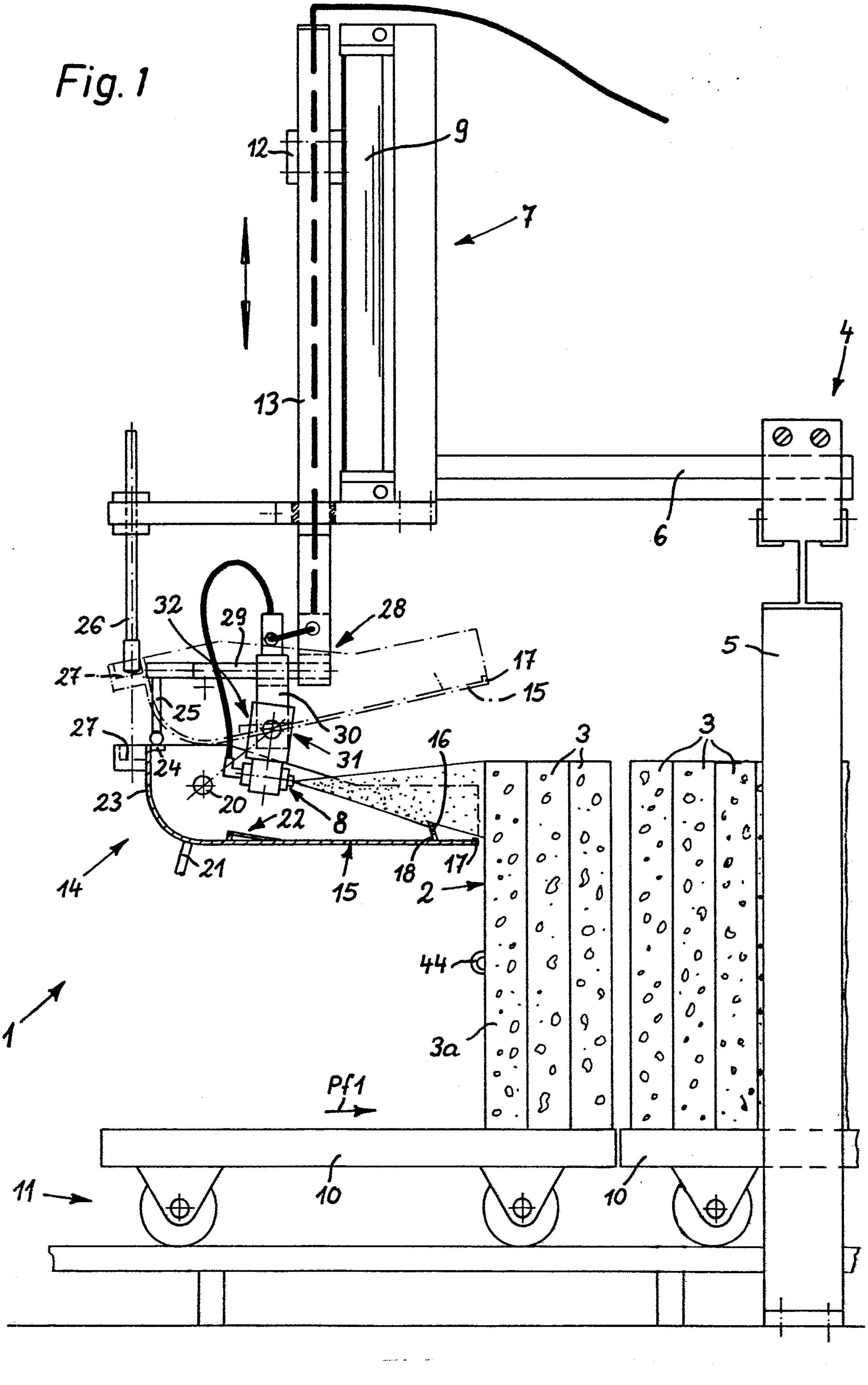

12
9
7
13
4
6
5
26
32
29
28
17
15
27
25
30
31
16
3
3
27
24
20
22
8
23
21
18
17
15
14
2
44
1
3a
Pf1
10
10
11

Fig. 2

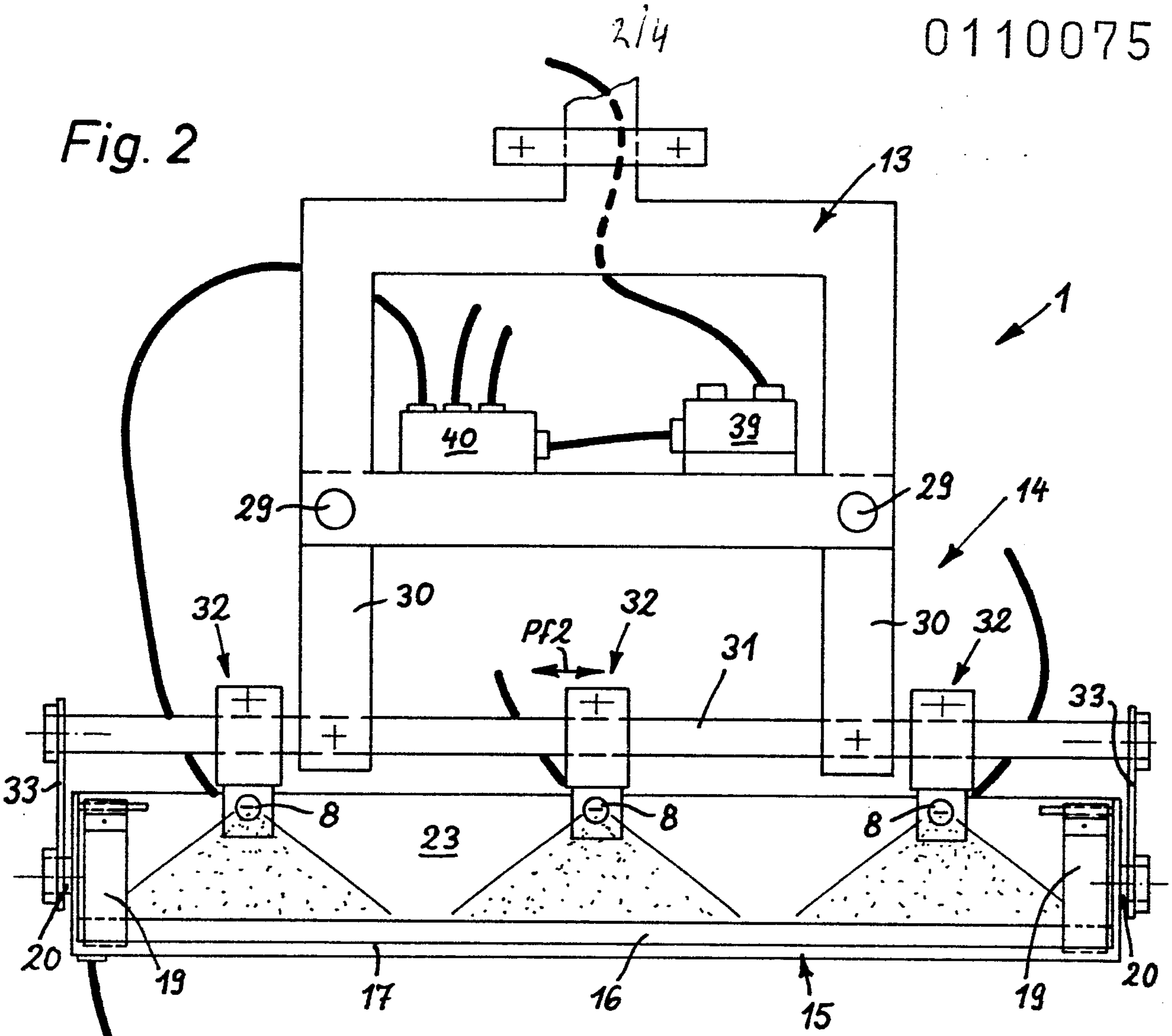
13
1
40
39
29
29
14
30
32
32
Pf2
30
32
31
33
33
8
23
8
8
20
19
17
16
15
19
20
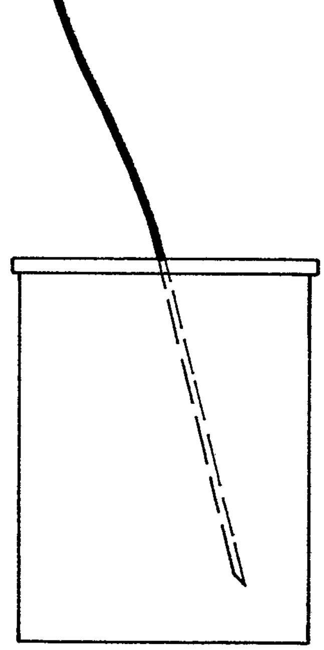

Fig. 3

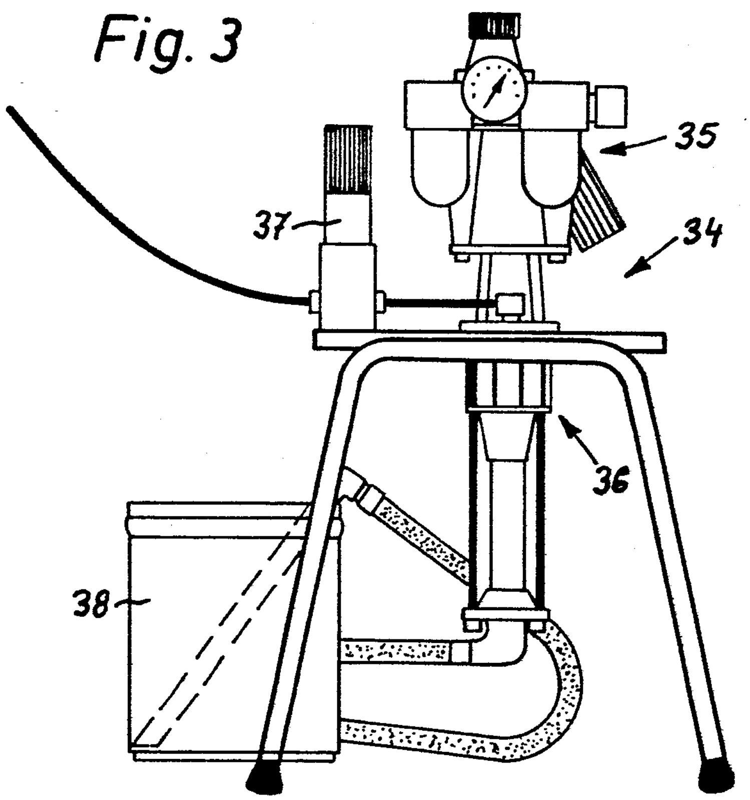
35
37
34
36
38

Fig.4

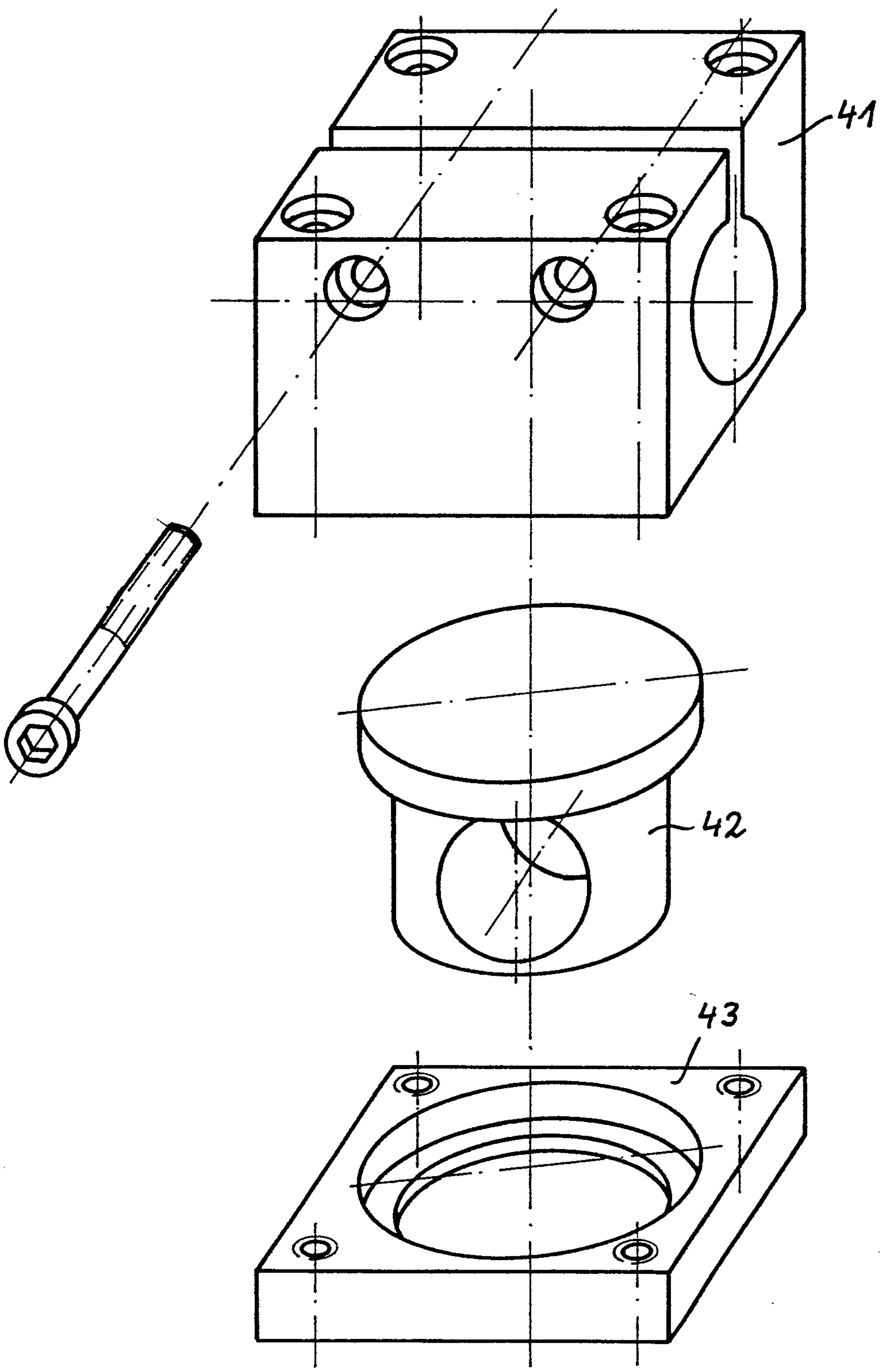

Fig. 5